# EUROPEAN PATENT APPLICATION

(11) **EP 0 601 293 A2**
(43) Date of publication of application: **15.06.1994**
(21) Application number: 93115340.7
(22) Date of filing: 23.09.1993
(51) Int. Cl.: G01S 5/14, G01S 5/00, H04B 7/185

(54) **Intelligent position tracking**

(30) Priority: 07.12.1992 US 986301
(71) Applicant: MOTOROLA, INC., Schaumburg, IL 60196 (US)
(72) Inventor: Maine, Kristine Patricia, Phoenix, Arizona 85044 (US)
(74) Representative: Hudson, Peter David

(57) **Abstract**

A constellation (12) of satellites (14) which are distributed around the earth serves as a communications infrastructure (12) that supports autonomous position determination and reporting of that position to a remote location (28). Subscriber units (30) are remotely programmed to activate upon the occurrence of an activation event (120) and to record an itinerary (244). In an intelligent tracking embodiment, reporting of position occurs only when a current position deviates from the itinerary (244). If subscriber units (30) can engage in activities (144) which lead to determining their position, they cooperate with the infrastructure (12) to determine their positions. To determine position, location pulses may be transmitted on a regular schedule (106, 144). Location pulses are transported between a fast moving satellite (14) and a subscriber unit (30). Relative movement causes different location pulses to have different propagation delays and Doppler characteristics. By analyzing changes in propagation delays and Doppler characteristics, a procedure (170) determines a position for a subscriber unit (30).

## Description

### TECHNICAL FIELD OF THE INVENTION

The present invention relates generally to remotely tracking the movement of an object. More specifically, the present invention relates to the use of an RF communication system to determine the position of a subscriber unit and to report that position to a monitoring office under certain conditions.

### BACKGROUND OF THE INVENTION

Many diverse applications need to remotely determine the position of various objects. For example, researchers and managers of wild or domestic animals often need to know where animals are located. In addition, managers of fleets, whether of automobiles, trucks, rail cars, planes, or ships, need to know locations for their vehicles. In still other applications, the locations of balloons, buoys, and other platforms need to be remotely known from time-to-time. Preferably, the locations of such objects are reported as needed to a remote monitoring office. The remote position determination process incorporates two basic steps. Namely, the objects' positions are determined from time-to-time, and data describing those positions are communicated to the monitoring office.

Conventional remote position determination systems force their users to make difficult compromises. For example, researchers currently utilize a satellite-based remote position determining system operated by the Centre National d'Etudes Spatials (CNES, France), NASA, and the NOAA. Transmitters are placed on objects to be tracked, and compatible receivers are located on one or two orbiting satellites. The satellites record the transmitted signals they receive and later dump data describing these signals to a ground processing station for Doppler-based calculations which determine positions. While this system can determine locations at some very remote locations, it is expensive, inflexible, and unreliable. Moreover, it is available primarily for scientific research or experimental tracking, not for commercial applications. Consequently, only a small portion of the remote position determination needs are met.

In particular, the unreliability of this conventional system is due, at least in part, to the fact that transmitters engage in numerous unnecessary transmissions and thereby consume large amounts of electrical power and reduce the life of the transmitter. Moreover, the ability of only one or two overhead satellites to receive a transmitter's signal and the ability of the ground processing station to accurately resolve the transmitter's location are dubious at best. The satellites can track only transmitters which happen to be under their ground paths, and accurate position determination requires that the transmitted signal be received at a satellite for a duration of around 20 minutes. Furthermore, the ground processing station often takes several weeks to provide location data to a monitoring office. By the time that a monitoring office learns of a location, the location data are stale. The inflexibility is due, at least in part, to an inability to control the operation of the transmitter after it is in the field and the limited life of the batteries used by the transmitter. Often times, the power drain of transmitters permits them to remain operational for only a few weeks at best. The high cost is due, at least in part, to the massive infrastructure which must be in place to support remote position determination.

Other remote position determination systems have been suggested. For example, one system suggests coupling a LORAN receiver with conventional cellular radiotelephones. The reliability of this system may improve upon the above-discussed satellite-based system in some ways, but reduce reliability in other ways. For example, this and similar systems would be operational only in locations where both LORAN signals can be received and where conventional cellular telecommunications are available. This limitation makes such a system inappropriate for many applications, such as those that require tracking over a broad area or those that require tracking in very remote areas. Moreover, the physical requirements for an antenna which receives LORAN signals make such a system inappropriate for applications requiring small physical size. Furthermore, the reliance upon two diverse systems, such as a LORAN positioning system and a cellular telecommunication system, increases complication and cost while proportionately increasing unreliability, weight, and power consumption.

The use of remote position determination systems to track remotely located objects presents other problems. For example, those who wish to track objects, often wish to track a large number of objects. If RF communications, such as cellular radiotelephones or the like, are employed to communicate positions for each of these large number of objects, and if each of the objects uses the RF communications over and over, then a capability for supporting an extensive amount of RF communications must be in place. This translates into excessive communication service fees and excessive data processing demands at the monitoring office.

### SUMMARY OF THE INVENTION

Accordingly, it is an advantage of the present invention that an improved system, method, and/or apparatus for remote position determination is provided.

Another advantage of the present invention is that reliable, flexible, and low cost remote position determination is provided.

Yet another advantage is that the present invention manages power consumption to extend battery life in a position determining unit.

Still another advantage is that the present invention utilizes a single communication system infrastructure to deliver communications and to determine position.

Yet another advantage is that the present invention yields reliable results over a substantially worldwide range.

Another advantage is that the present invention provides an improved intelligent tracking device.

Another advantage is that the present invention provides a tracking device which minimizes the amount of RF communications required to accomplish the tracking function.

The above and other advantages of the present invention are carried out in one form by an improved method for operating a mobile position determining unit (PDU) in cooperation with a communication system. The method calls for receiving an acquisition signal from the communication system. In response to the receipt of an acquisition signal, cooperative communications are carried on with the communication system to resolve and report a position for the PDU. The cooperative communications are carried on through the transmission of messages from the PDU for receipt by the communication system.

The above and other advantages of the present invention are carried out in another form by a method for operating a subscriber unit in cooperation with a communication system. This method calls for establishing a programming call through the communication system. During the programming call, data describing an itinerary are received. After the programming call, a position for the subscriber unit is determined. The subscriber unit's position is compared with the itinerary data. When the subscriber unit's position does not match the itinerary, a report call is initiated through the communication system to report a variance from the itinerary.

### BRIEF DESCRIPTION OF THE DRAWINGS

A more complete understanding of the present invention may be derived by referring to the detailed description and claims when considered in connection with the Figures, wherein like reference numbers refer to similar items throughout the Figures, and:
FIG. 1 shows an environment in which the present invention is practiced;
FIG. 2 shows an exemplary cellular pattern formed on the surface of the earth through the operation of satellite radio communication stations that serve as nodes in a communication system;
FIG. 3 shows a block diagram of a position determining unit (PDU) which communicates through the communication system;
FIG. 4 shows a block diagram of a central switching office (CSO) which serves as a node in the communication system;
FIG. 5 shows a block diagram of a satellite radio communication station;
FIG. 6 shows a flow chart of tasks performed by a satellite radio communication station;
FIG. 7 shows a flow chart of tasks performed by a PDU while operating in an inactive mode;
FIG. 8 shows a flow chart of tasks performed by a PDU while operating in a operational mode;
FIG. 9 shows a flow chart of tasks performed by a PDU while operating in a standby mode;
FIG. 10 shows an exemplary block diagram of data items maintained in memory structures stored within a memory of a PDU;
FIG. 11 shows a flow chart of tasks performed by a processing center to determine positions;
FIG. 12 graphically illustrates one embodiment of a process useable to determine positions of PDUs;
FIG. 13 shows a block diagram of a subscriber unit which communicates through the communication system and performs intelligent tracking functions;
FIG. 14 shows a flow chart of tasks performed by a monitoring office while performing a New Route procedure;
FIG. 15 shows a flow chart of tasks performed by a monitoring office while performing an Incoming Call procedure;
FIG. 16 shows a flow chart of tasks performed by a monitoring office while performing an Outgoing Call procedure;
FIG. 17 shows a flow chart of tasks performed by a subscriber unit while operating in a standby mode that supports intelligent tracking functions;
FIG. 18 shows an exemplary block diagram of data items maintained in a memory structure stored within a memory of a subscriber unit to support intelligent tracking;
FIG. 19 shows a flow chart of tasks performed by a subscriber unit while performing an Incoming Message procedure; and
FIG. 20 shows a flow chart of tasks performed by a subscriber unit while performing a Check Itinerary procedure.

### DETAILED DESCRIPTION OF THE PREFERRED EMBODIMENTS

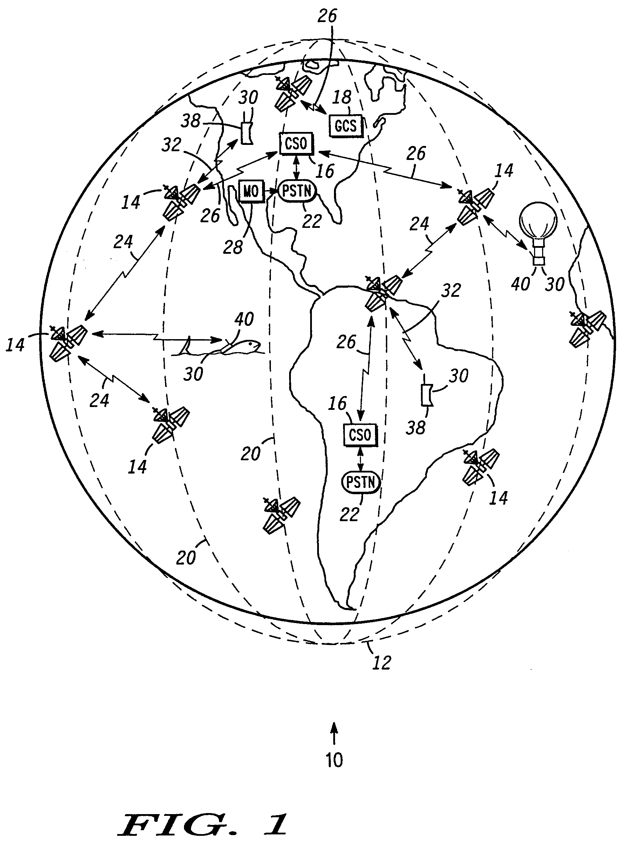

FIG. 1 illustrates an environment 10 within which preferred embodiments of the present invention are practiced. Environment 10 includes a satellite-based communication infrastructure, system, or network 12. Network 12 is dispersed over the earth through the use of several above-the-earth radio communication stations or nodes, such as orbiting satellites 14. Network 12 additionally includes devices or nodes on the ground that are in communication with satellites 14. In particular, satellites 14 communicate with many central switching offices (CSOs) 16, of which FIG. 1 shows only two, and a few ground control stations (GCSs) 18, of which FIG. 1 shows only one.

In the preferred embodiment, satellites 14 occupy substantially polar, low-earth orbits 20. The preferred embodiment of network 12 uses around six polar orbits, with each orbit holding around eleven of satellites 14. For clarity, FIG. 1 illustrates only a few of these satellites 14. Orbits 20 and satellites 14 are distributed around the earth. In the preferred embodiment, each orbit 20 encircles the earth at an altitude of around 765 km. Due to these relatively low orbits 20, substantially line-of-sight electromagnetic transmissions from any one satellite 14 cover a relatively small area of the earth at any point in time. For example, when satellites 14 occupy orbits at around 765 km above the earth, such transmissions cover "footprint" areas around 4075 km in diameter. Moreover, due to the low-earth character of orbits 20, satellites 14 travel with respect to the earth at around 25,000 km/hr. This allows a satellite 14 to be within view of a point on the surface of the earth for a maximum period of around nine minutes. It also provides for a considerable Doppler shift in the frequencies of signals transmitted between a satellite as it approaches and recedes and a point on the surface of the earth.

While FIG. 1 and the above-presented discussion describe a preferred orbital geometry for satellites 14, those skilled in the art will appreciate that the communication nodes which satellites 14 provide need not be positioned precisely as described herein. For example, such nodes may be located on the surface of the earth or in orbits other than those described herein. Likewise, the precise number of nodes may vary from network to network.

CSOs 16 of network 12 are preferably distributed over the surface of the earth in accordance with geo-political boundaries. GCSs 18 preferably reside in extreme northern or southern latitudes, where the convergence of orbits 20 causes a greater number of satellites 14 to come within direct line-of-sight view of a single point on the surface of the earth when compared to more equatorial latitudes. Preferably, around four GCSs 18 are used so that all satellites 14 in the constellation may at some point in their orbits 20 come within direct view of their assigned GCS 18. Nothing prevents CSOs 16 and GCSs 18 from being located together on the ground. However, CSOs 16 serve a different function from that of GCSs 18. Preferably, CSOs 16 operate as communication nodes in network 12. Diverse terrestrial-based communications systems, such as the worldwide public switched telecommunications network (PSTN) 22, couple to CSOs 16 and may access network 12 through CSOs 16. GCSs 18 preferably perform telemetry, tracking, and control (TT&C) functions for the constellation of satellites 14.

Network 12 transports communications from one point to another. In particular, communications may be delivered between nearby satellites 14 via radiocommunication cross-links 24, and communications may be delivered between a CSO 16 or a GCS 18 and an overhead satellite 14 via a radiocommunication earth-link 26. Accordingly, any telecommunication device throughout the world may potentially use network 12 via a local PSTN 22 to transport communications. Such telecommunication devices include a modem-equipped, personal computer (not shown) located at or coupled to a monitoring office (MO) 28. Those skilled in the art will appreciate that MO 28 may be located at virtually any urban location in the world and still be able to access network 12 via a PSTN 22.

Environment 10 additionally includes any number, potentially in the millions, of individual radiocommunication subscriber units 30. Units 30 primarily communicate directly with satellites 14 of network 12 via subscriber unit radiocommunication links 32. Subscriber units 30 may be located anywhere on the surface of the earth or in the atmosphere above the earth. Due to the configuration of the constellation of satellites 14 in the preferred embodiment, at least one of satellites 14 is within view of each point on the surface of the earth at all times. Accordingly, network 12 may establish a communication circuit through the constellation of satellites 14 between any two individual subscriber units 30, between any individual subscriber unit 30 and a MO 28, or between a MO 28 and any other telecommunication device coupled to a PSTN throughout the world.

Radiocommunication links 32, which the constellation of satellites 14 use in communicating with subscriber units 30, consume a limited amount of the electromagnetic spectrum. The precise parameters of this spectrum are unimportant to the present invention and may vary from network to network. The present invention divides this spectrum into discrete portions, hereinafter referred to as channel sets. The precise manner of dividing this spectrum is also unimportant to the present invention. For example, the spectrum may be divided into discrete frequency bands, discrete time slots, discrete coding techniques, or a combination of these. Desirably, each of these discrete channel sets is orthogonal to all other channel sets. In other words, simultaneous communication may take place at a common location over every channel set without significant interference between the channel sets.

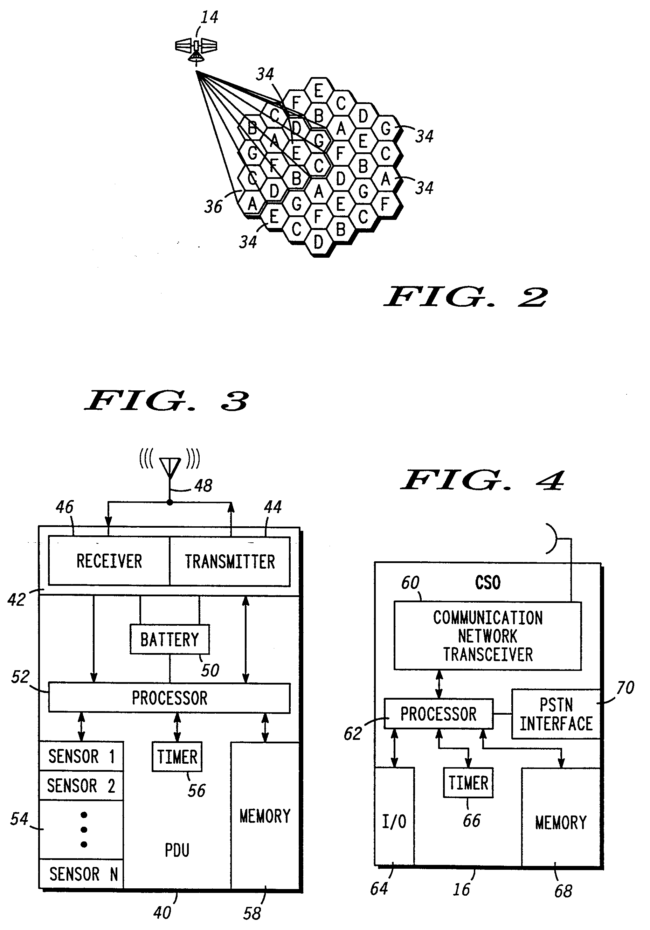

FIG. 2 shows a layout diagram of a cellular antenna pattern achieved by satellites 14. Each satellite 14 includes an array (not shown) of directional antennas. Each array projects numerous discrete antenna patterns on the earth's surface at numerous diverse angles away from its satellite 14. FIG. 2 shows a diagram of a resulting pattern of cells 34 that satellites 14 collectively form on the surface of the earth. A footprint region 36, which is bounded by a double line in FIG. 2, results from the antenna patterns produced by an antenna array of a single satellite 14. Cells 34 which reside outside of region 36 are produced by antenna arrays from other satellites 14.

The precise number of channel sets into which the spectrum used by satellites 14 is divided is not important to the present invention. FIG. 2 illustrates an exemplary assignment of channel sets to cells 34 in accordance with the present invention and in accordance with a division of the spectrum into seven discrete channel sets. FIG. 2 references the seven discrete channel sets through the use of the characters "A", "B", "C", "D", "E", "F", and "G". Those skilled in the art will appreciate that a different number of channel sets, for example twelve, may be used and that, if a different number is used the resulting assignment of channel sets to cells 34 will differ from the assignment pattern depicted in FIG. 2. Likewise, those skilled in the art will appreciate that each channel set may include one channel or any number of orthogonal channels therein. As illustrated in FIG. 2, the assignment of channel sets to cells 34 allows the limited spectrum to be reused in geographically spaced apart cells 34. In other words, non-orthogonal channel sets simultaneously carry communications without interference because the cells 34 where the non-orthogonal channel sets are used are spaced apart from one another and do not overlap. Moreover, each subscriber unit 30 is capable of operating with any of the discrete channel sets, and the particular channel set used at any particular time by any particular subscriber unit 30 is controlled by network 12.

With reference back to FIG. 1, at least two different types of individual subscriber units 30 are contemplated in accordance with the preferred embodiments of the present invention. A voice subscriber unit (VSU) 38 is preferably configured for human operation and for conveying voice communication, much like conventional telephony and cellular radiotelephony. Of course, those skilled in the art will appreciate that nothing prevents VSUs 38 from conveying data, as is common in accordance with conventional terrestrial telecommunications. While nothing requires any particular single VSU 38 to be located at any particular place on the earth, VSUs 38 are predominantly located in populated areas because humans are predominantly located in such areas.

A position determining unit (PDU) 40 represents another type of subscriber unit 30. PDUs 40 are preferably configured to convey data and to operate without human intervention. In particular, the data a PDU 40 is configured to convey describe a location for the PDU 40, and may describe other environmental, status, or non-location characteristics. While no single PDU 40 is required to be placed at any particular location on the earth, PDUs 40 may advantageously be located predominantly in unpopulated areas. Thus, the communications infrastructure provided by network 12 supports communication applications located in both populated and unpopulated areas, and the overall cost of the infrastructure needed to support both communication applications is reduced accordingly.

PDUs 40 are intended to be physically associated with mobile objects. To name a few examples, a PDU 40 may be attached to wild or domestic marine or land-based animals, prisoners, weather balloons, ocean buoys, railroad cars, freight trailers or containers, airplanes, ships, cars, and the like. Such mobile objects may be regularly located in unpopulated areas or at least travel through unpopulated areas. As discussed below, a remotely located monitoring office (MO) 28 may receive location and other data concerning the object to which a PDU 40 is attached. In accordance with the preferred embodiments of the present invention, this remote position determining service is highly reliable, worldwide in scope, flexible, and may be provided at a reasonable cost.

FIG. 3 shows a block diagram of a PDU 40. Preferably, any number of PDUs 40 within environment 10 (see FIG. 1) are substantially described by the block diagram of FIG. 3. PDU 40 includes a communication network transceiver 42, which includes a transmitter 44 and a receiver 46. Transmitter 44 and receiver 46 transmit and receive signals in a format compatible with satellites 14 and link 32 (see FIG. 1). These signals include data messages which allow PDU 40 to be in data communication with a nearby satellite 14. Through this satellite 14, PDU 40 is also in data communication with any other node of network 12, and with a MO 28 (see FIG. 1). Preferably, transmitter 44 and receiver 46 utilize a single antenna 48.

Transmitter 44 and receiver 46 both couple to a battery section 50 and to a processor 52. Processor 52 additionally couples to battery section 50 to selectively control the application of electrical power to transmitter 44, receiver 46, and other sections of PDU 40. Processor 52 additionally couples to a sensor section 54, a timer 56, and a memory 58. Processor 52 uses various sensors from sensor section 54 to monitor the environment near PDU 40, including parameters related to the object to which PDU 40 may be attached. For example, sensor section 54 may allow processor 52 to obtain data describing temperature, pressure, heartbeat, respiration rate, ambient light, humidity, and the like. Processor 52 uses timer 56 to maintain the current date and time. Memory 58 includes data which serve as instructions to processor 52 and which, when executed by processor 52 cause PDU 40 to carry out procedures which are discussed below. In addition, memory 58 includes variables, tables, and databases that are manipulated due to the operation of PDU 40.

A VSU 38 (see FIG. 1) may be configured in a manner similar to the block diagram shown in FIG. 3. However, VSU 38 may omit sensor section 54 and incorporate an I/O section that, among other features, translates audio into electrical signals, and vice-versa, and that allows a user to input keystrokes to instruct VSU 38 about the identity of parties being called.

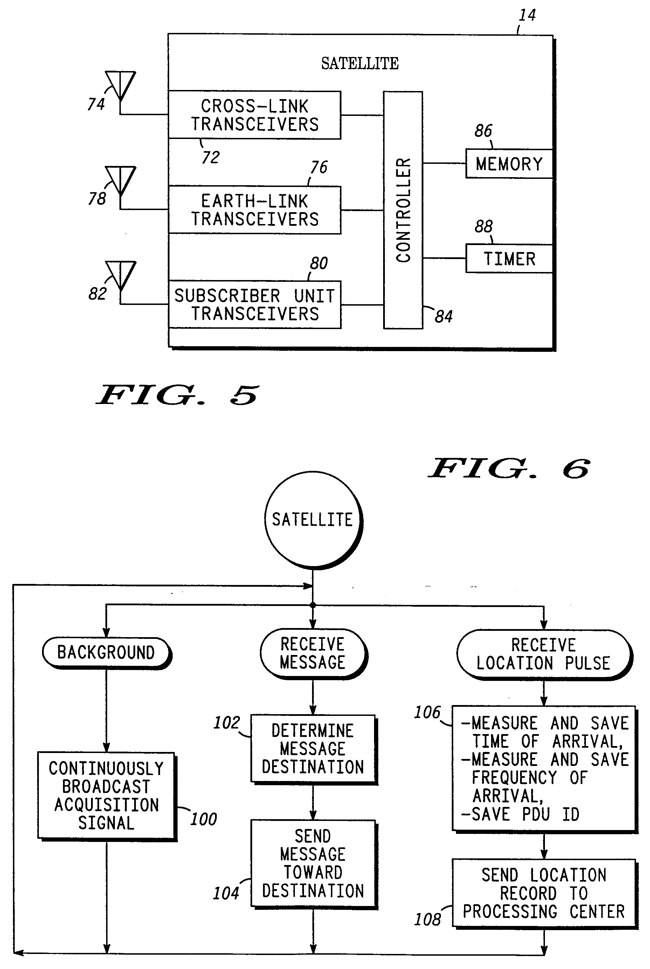

FIG. 4 shows a block diagram of a CSO 16. Preferably, all CSOs 16 within environment 10 (see FIG. 1) are substantially described by the block diagram of FIG. 4. CSO 16 includes a transceiver 60 which transmits and receives signals in a format compatible with satellites 14 and earth-links 26 (see FIG. 1). These signals carry data messages which allow CSO 16 to communicate with a nearby satellite 14, with subscriber units 30 (see FIG. 1) that the CSO 16 is currently serving, with other CSOs 16 that the CSO 16 may be cooperating with in setting up a call, or with any other node within network 12. Transceiver 60 couples to a processor 62. Processor 62 also couples to an I/O section 64, a timer 66, a memory 68, and a PSTN interface 70. I/O section 64 receives input from keyboards and other input devices and provides data to display terminals, printers, and other output devices. Processor 62 uses timer 66 to maintain the current date and time. Memory 68 includes semiconductor, magnetic, and other storage devices for storing data that serve as instructions to processor 62 and which, when executed by processor 62, cause CSO 16 to carry out procedures which are discussed below. In addition, memory 68 includes variables, tables, and databases that are manipulated due to the operation of CSO 16. Through interface 70, CSO 16 communicates with the PSTN 22.

FIG. 5 shows a block diagram of a radio communication station provided by a satellite 14. Preferably, all satellites 14 within environment 10 (see FIG. 1) are substantially described by the block diagram of FIG. 5. Satellite 14 includes cross-link transceivers 72 and associated antennas 74. Transceivers 72 and antennas 74 support cross-links 24 (see FIG. 1) to other nearby satellites 14. Earth-link transceivers 76 and associated antennas 78 support earth-links 26 (see FIG. 1). Moreover, subscriber unit transceivers 80 and associated antennas 82 support subscriber links 32 (see FIG. 1). Preferably, each satellite 14 may simultaneously support a link 32 for up to a thousand or more of subscriber units 30 (see FIG. 1). Of course, those skilled in the art will appreciate that antennas 74, 78, and 82 may be implemented either as single multi-directional antennas or as banks of discrete antennas.

A controller 84 couples to each of transceivers 72, 76, and 80 as well as to a memory 86 and a timer 88. Controller 84 may be implemented using one or more processors. Controller 84 uses timer 88 to maintain the current date and time. Preferably, timer 88 is synchronized with "system time" from time-to-time through communications with GCSs 18 (see FIG. 1). Hence, all satellites 14 within network 12 recognize the same absolute point in time at substantially the same instant. Memory 86 stores data that serve as instructions to controller 84 and that, when executed by controller 84 cause satellite 14 to carry out procedures which are discussed below. In addition, memory 86 includes variables, tables, and databases that are manipulated due to the operation of satellite 14.

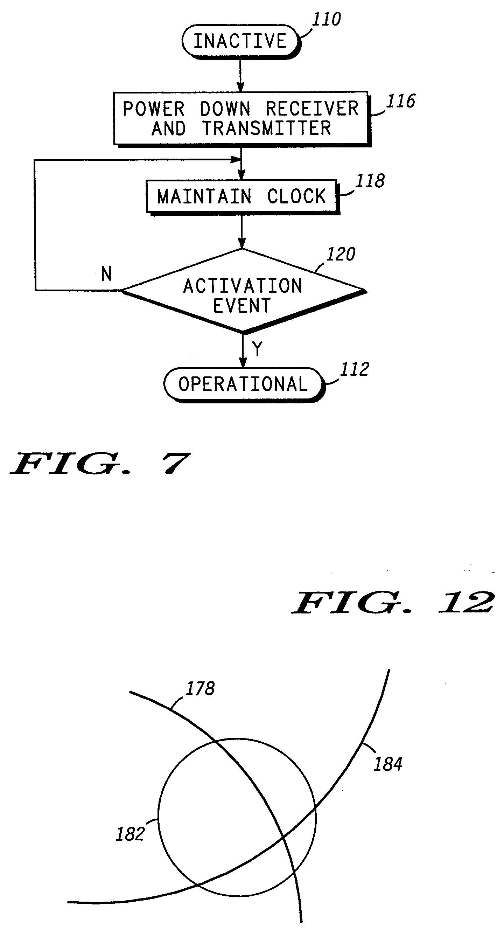

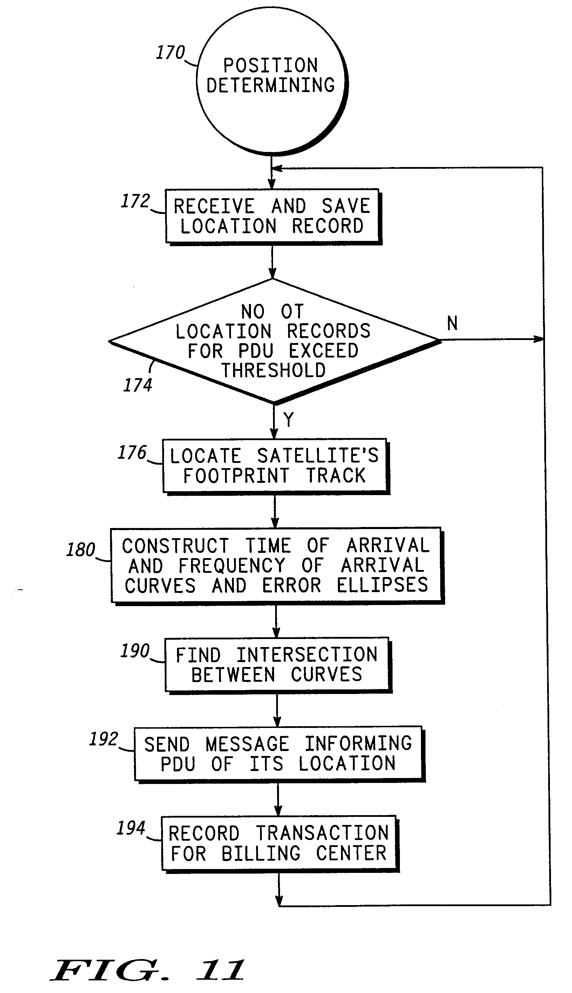

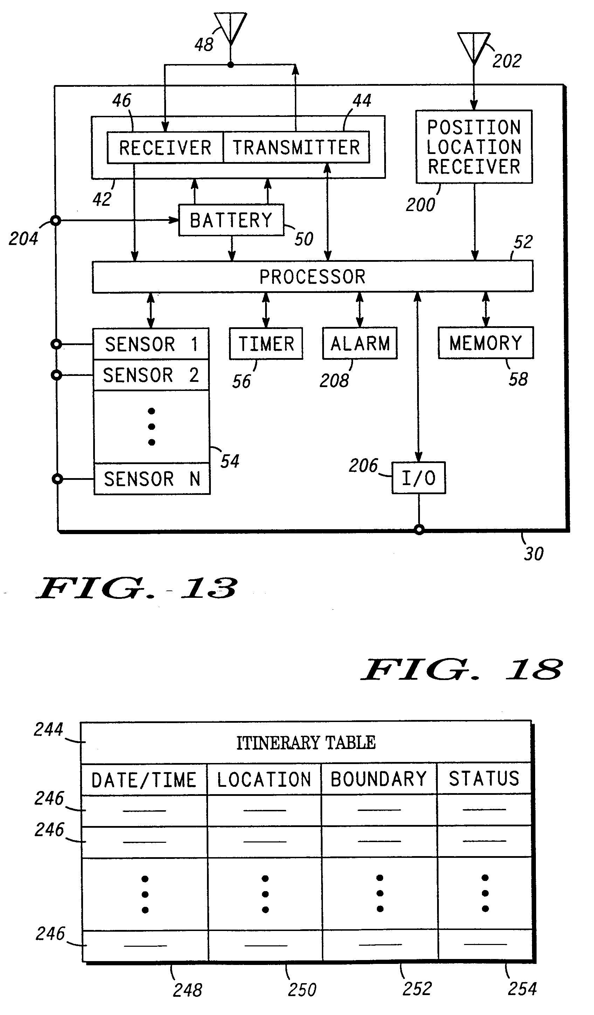

FIGs. 6-9 and 11 show flow charts of procedures which are used to support position determination and reporting of position in accordance with preferred embodiments of the present invention. FIG. 6 illustrates a few procedures which are performed by satellites 14 in accordance with a preferred embodiment of the present invention. FIGs. 7-9 illustrate procedures performed by PDUs 40, and FIG 11 illustrates a procedure performed by a processing center, which in a preferred embodiment may be provided by CSOs 16. FIGs. 13-20 show block diagrams and flow charts that depict an embodiment of the present invention which is adapted to support intelligent tracking functions.

With reference to FIG. 6, satellites 14 perform a task 100, suggested as being a background task in FIG. 6, to transmit an acquisition signal. The acquisition signal is continuously or repetitiously broadcast over predetermined channels within each channel set. This acquisition signal allows subscriber units 30 to determine how to communicate through network 12, as discussed below, and serves a role in coordinating a multiplicity of simultaneous and independent communications supported by network 12. The acquisition signal may convey a limited amount of data to subscriber units 30, such as the identity of the satellite 14 broadcasting the acquisition signal, the satellite's version of system time, and the identity of the cell 34 (see FIG. 2) to which the acquisition signal is directed.

In one preferred embodiment of the present invention, referred to hereinafter as a local position determining embodiment, the acquisition signal may convey the geolocation of the center of the cell 34 to which the acquisition signal is directed, and a predetermined stream of location pulses which may be used by subscriber unit 30 to obtain location-determining data. In accordance with this local position determining embodiment, PDU's 40 either determine their own locations or collect sufficient data so that their locations may be calculated later at a remote processing center, such as a MO 28.

Satellites 14 act substantially as repeaters within network 12 (see FIG. 1). In other words, most messages received at one of a satellite's receivers are re-transmitted from the satellite. Satellites 14 perform a Receive Message procedure when they receive messages. In this context, messages may be any data whatsoever, whether voice communications, data communications, or overhead control data used for call setup, call termination, call handoff, call management, call billing, or other control messages. As shown in FIG. 6, a task 102 examines data communicated by or associated with a received message to determine the destination for the message. After task 102, a task 104 sends the message on toward its destination by writing the message to an appropriate buffer (not shown) associated with a transmitter that will transmit the message toward its destination.

In another preferred embodiment of the present invention, referred to hereinafter as a remote position determining embodiment, satellites 14 perform a Receive Location Pulse procedure to support the determination of positions for PDU's 40. In this remote position determining embodiment, PDUs 40, not satellites 14, transmit location pulses in accordance with a predetermined schedule. Since satellites 14 move at high speed with respect to PDUs 40, PDUs 40 may be viewed as being relatively stationary. This satellite movement allows one location pulse to be received when a satellite 14 is in one position in the sky while another location pulse is received when the satellite 14 is in a substantially different position in the sky. Due to this movement, the Doppler shift of the received location pulses and the propagation delay of the received location pulses change. As discussed below in connection with FIGs. 11-12, these timing and Doppler characteristics allow positions of PDUs 40 to be determined.

Satellites 14 perform the Receive Location Pulse procedure whenever a location pulse is received. A task 106 measures the time of arrival and frequency of arrival for the location pulse and saves data describing these parameters along with data describing the identity of the PDUs 40 sending the location pulses. For each PDU 40 transmitting location pulses, such data are collected in a location record. A task 108 eventually sends the location record to a processing center, which is preferably, but not necessarily, a nearby CSO 16 (see FIG. 1). Accordingly, in the remote position determining embodiment of the present invention, satellites 14 measure and collect data which are used by a processing center to determine location.

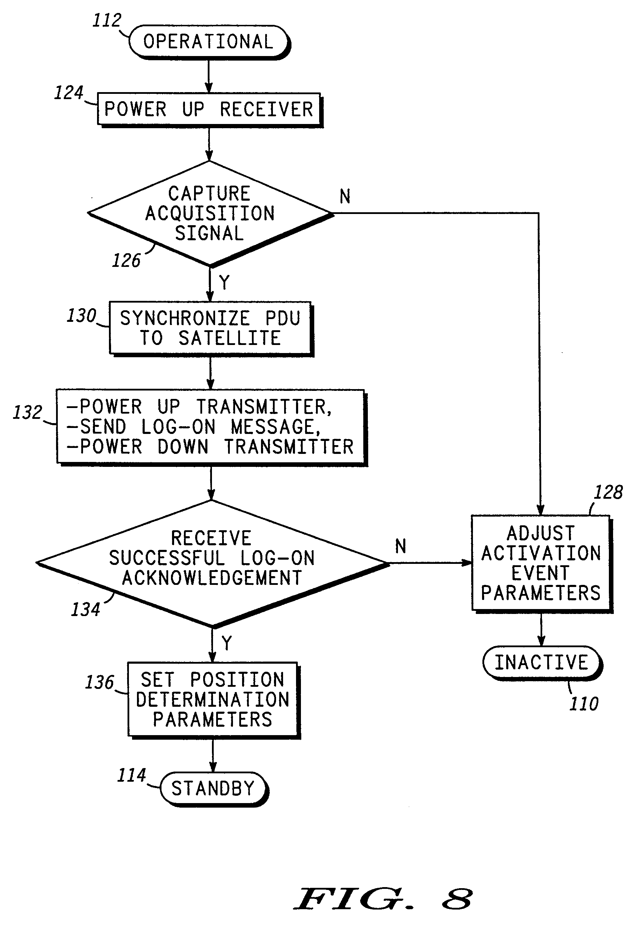

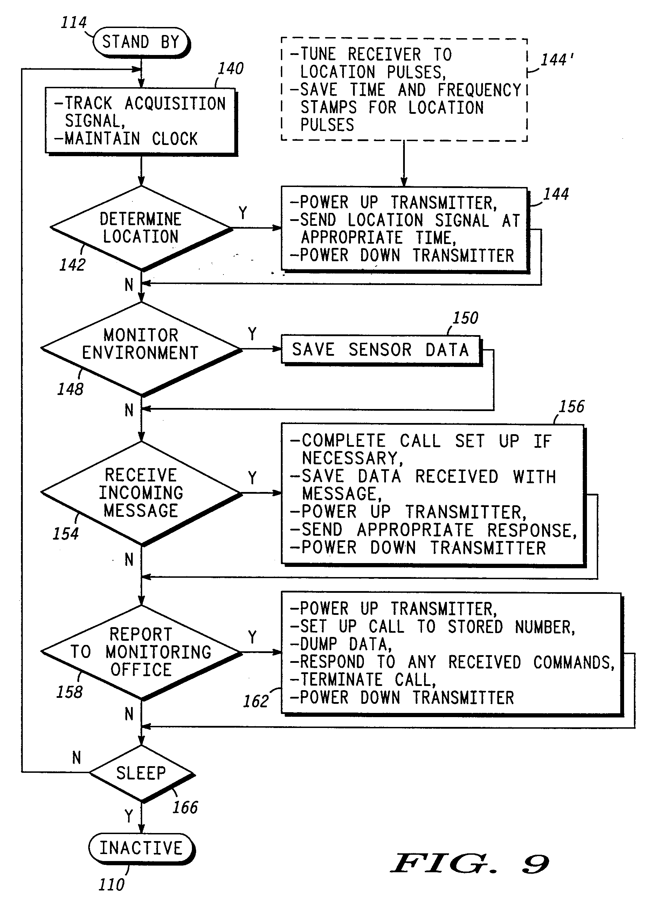

FIGs. 7-9 show flow charts of various procedures performed by PDUs 40. In particular, FIG. 7 shows a flow chart of an Inactive procedure 110, which a PDU 40 performs when it is in a very low power, inactive mode of operation. FIG. 8 shows a flow chart of an Operational procedure 112, which a PDU 40 performs when it wakes-up from the inactive mode of operation. FIG. 9 shows a flow chart of a Standby procedure 114, which a PDU 40 performs after it completes Operational procedure 112 and has registered with network 12 (see FIG. 1).

With reference to FIG. 7, when Inactive procedure 110 is first entered, a task 116 is performed to power down transmitter 44 and receiver 46, (see FIG. 3) and all other non-essential circuits within PDU 40. Of course, those skilled in the art will appreciate that task 116 does not require transmitter 44, for example, to be powered up prior to performing task 116. Rather, task 116 simply insures that transmitter 44 is powered down. Task 116 is performed when processor 52 sends appropriate controlling commands to battery section 50 (see FIG. 3) so that battery power is not coupled to transmitter 44, receiver 46, or other non-essential circuits. Preferably, battery power remains coupled to processor 52, and at least a portion of memory 58. In addition, battery power remains coupled to at least a portion of sensor section 54 and/or timer 56. Thus, in the inactive mode of operation, PDU 40 remains sufficiently energized so that it can autonomously determine when to exit the inactive mode of operation.

After task 116, a task 118 maintains a time-of-day and date clock for PDU 40. After task 118, a query task 120 determines whether an activation event has occurred. An activation event is an event that will cause PDU 40 to exit its inactive mode of operation. Several events may qualify as activation events, and these events are preferably remotely programmable via data received through network 12.

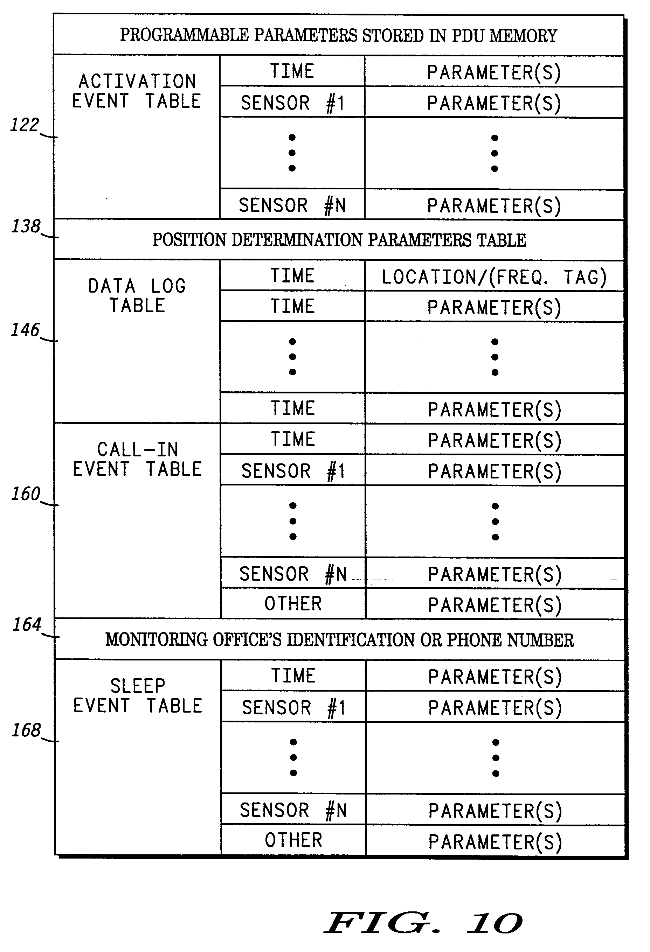

FIG. 10 shows a block diagram of exemplary memory structures maintained within memory 58 of PDU 40 (see FIG. 3). One memory structure is a table 122 of activation events. Task 120 compares its internal clock and/or values observed at various sensors within sensor section 54 (see FIG. 3) to data programmed in table 122. For example, table 122 may indicate that activation should occur at a particular date and time. Task 120 would then determine whether its internal clock indicates that particular date and time has occurred. Table 122 may additionally specify that activation events should occur at regular specified intervals thereafter. Alternatively, table 122 may specify that one or more of the sensors within sensor section 54 (see FIG. 3) should read a particular value to initiate activation. For example, a sensor which indicates when a marine mammal is on the surface of the ocean may be used as an activation event. Alternatively, sensors may indicate that the opening of a cargo door or the existence of a predetermined temperature of a refrigerator container represents an activation event. Of course, those skilled in the art will appreciate that table 122 may be programmed so that specified potential activation events may be combined by ANDing or ORing, and that table 122 may be programmed so that other potential activation events are ignored at task 120.

Table 122 supports flexibility, low cost, and reliability. In particular, flexibility is enhanced because table 122 may be programmed to achieve whatever level of position determination and reporting is desired. Low cost is enhanced because table 122 may be programmed to minimize position determination and position reporting services so that unneeded services are not purchased by the subscriber. Reliability, in the form of useful product life, is enhanced because PDUs 40 can be programmed so that they remain inactive for as much time as possible, and so that they become active only when valuable data may be collected or only when likely chances of determining and/or reporting the location data exist. This conserves battery power to extend the life of PDU 40.

With reference back to FIG. 7, when task 120 determines that no activation event has occurred, then program control simply returns to task 118, and PDU 40 remains in the inactive mode of operation. On the other hand, when task 120 determines that an activation event has occurred, then program control for PDU 40 proceeds to Operational procedure 112.

FIG. 8 shows a flow chart for Operational procedure 112. Upon entering procedure 112, a task 124 is performed to energize or power up receiver 46 (see FIG. 3) of PDU 40. By powering up receiver 46, PDU 40 begins to consume an increasing amount of electrical energy. However, PDU 40 may also begin to perform tasks which have a high likelihood of being valuable to remote position determination.

In particular, receiver 46 may now begin to receive, capture or synchronize to an acquisition signal broadcast by an overhead satellite 14 (see task 100, FIG. 6). An acquisition signal may be considered captured when PDU 40 can read valid data carried by the acquisition signal. Due to variations in Doppler and propagation time of the acquisition signal, receiver 46 may need to search for some period of time before it can lock onto an acquisition signal. In addition, receiver 46 may need to discriminate between acquisition signals associated with more than one of cells 34 (see FIG. 2). Accordingly, after an appropriate period of time, a query task 126 determines whether the acquisition signal has been captured.

A PDU 40 may fail to capture an acquisition signal for any one of several reasons. For example, a PDU 40 may be underwater, underground, within a building, or near some interfering structure. When task 126 determines that PDU 40 has failed to capture an acquisition signal, a task 128 adjusts the activation event parameters programmed in table 122 (see FIG. 10), and program control returns to Inactive procedure 110, discussed above in connection with FIG. 7. The activation event parameters may be adjusted, for example, by altering a wake-up time parameter so that PDU 40 will again try to capture an acquisition signal at some future point in time. Such a future point in time, or the duration between the present time and such a future point in time, may be programmed in table 122.

Accordingly, when an acquisition signal cannot be acquired, PDU 40 goes inactive to minimize the consumption of power until a new activation event occurs. The new activation event may, but need not, be the occurrence of a predetermined future point in time. PDU 40 uses the capture of the acquisition signal as a predictor of future success in being able to determine position and/or report that position to MO 28 (see FIG. 1). When the acquisition signal cannot be captured, PDU 40 desirably goes inactive to conserve power rather than to continue operations that have a low probability of producing valuable data.

When task 126 determines that an acquisition signal has been captured, PDU 40 may conclude that a good likelihood exists for being able to determine position and/or report that position. Consequently, a task 130 adjusts parameters of transceiver 42 (see FIG. 3) to synchronize or otherwise coordinate communication with the satellite 14 whose acquisition signal has been captured. This synchronization, which occurs in response to receiving an acquisition signal, allows the spectrum managed by network 12 (see FIG. 1) to be used most efficiently. In other words, due to the coordination of communications between satellites 14 and subscriber units 30 (see FIG. 1), the volume of communications passing through satellites 14 may be maximized, and the cost to each subscriber of the communications infrastructure which supports position determination and other communications may be reduced.

After task 130, a task 132 energizes transmitter 44 (see FIG. 3) and transmits a log-on message to network 12 (see FIG. 12). The log-on message preferably includes a unique identification number associated with the PDU 40 sending the message. Network 12, and particularly a nearby CSO 16 thereof, interprets the log-on message as a request for registering the identified PDU 40 to obtain position determination or communication services from network 12. Preferably, task 132 powers down transmitter 44 of PDU 40 as soon as the message has been transmitted. Those skilled in the art will appreciate that the energization of transmitter 44 causes PDU 40 to consume a considerable amount of power. However, transmitter 44 needs to be activated for only a very short period of time to transmit a log-on message. Hence only a relatively small energy drain results.

The particular processes used by network 12 to determine whether to register PDU 40 and how to accomplish registration of a PDU 40 are not important to the present invention. Network 12 responds to the log-on message by returning an acknowledgement message which indicates whether network 12 has registered the PDU 40 to receive services. After task 132, PDU 40 performs a query task 134 to determine whether a successful log-on acknowledgement message has been received. Task 134 may be performed by tuning receiver 46 (see FIG. 3) to a particular channel which will broadcast messages for receipt by subscriber units 30 (see FIG. 1). The acknowledgement message will be addressed to particular PDUs 40 by including identification numbers for the particular PDUs.

If task 134 determines that no successful log-on acknowledgement has been received, program control proceeds to task 128 to revise activation event parameters and then enter the inactive mode of operation. Network 12 may refuse registration for any one of several reasons. For example, higher priority communication traffic may currently have network 12 saturated, or the subscriber for the particular PDU 40 requesting registration may have failed to pay bills for past services. In these and other situations, task 128 may go inactive by returning to procedure 110 to conserve power and wake up at some future date to try to access network 12 again. By going inactive, the battery life and the future usefulness of PDU 40 is extended. On the other hand, PDU 40 may be programmed by appropriate entries in memory 58 to repeat tasks 126, 128, 130, 132, and 134 a predetermined number of times before going inactive.

When task 134 determines that a successful log-on acknowledgement has been received, a task 136 sets position determination parameters in accordance with any data included with the acknowledgement. By setting position determination parameters, PDU 40 becomes programmed to operate using particular parameters which will achieve best results for network 12. For example, in the remote position determination embodiment of the present invention discussed above, such parameters may specify a particular frequency channel and time slot to use in transmitting location pulses that will be received at satellite 14, as discussed above in connection with tasks 106-108 (see FIG. 6). In addition, such parameters may specify a particular duration for spacing apart location pulses. In the preferred embodiment, this duration is around five seconds, but this value may be increased or decreased depending on the application. Task 136 sets the position determination parameters by writing appropriate data to memory 58 of PDU 40, and particularly to a position determination parameters table 138 (see FIG. 10) stored therein. After task 136, PDU 40 has determined that success in engaging in position determination and other activities is likely, and program control proceeds to Standby procedure 114.

FIG. 9 presents a flow chart of Standby procedure 114. Upon entering procedure 114, PDU 40 may perform some background activities in a task 140, such as continuing to track the acquisition signal which was captured above in task 126 (see FIG. 8) and maintaining its internal clock. After task 140, a query task 142 determines if PDU 40 needs to engage in position determination activities through cooperative communications with network 12. This is a programmable parameter which will normally be set to indicate that position determination activities are required.

To engage in position determination activities, PDU 40 performs a task 144, which is configured to inform network 12, either directly or indirectly through cooperative communications with network 12, of the location of PDU 40. In the present context, cooperative communications refers to communications in which one party transmits information that, by prior arrangement, the other party can interpret to determine position. In particular, in the remote position determining embodiment of the present invention, task 144 transmits location pulses at the appropriate times. The appropriate times may have been set in accordance with task 136 (see FIG. 8). Preferably, transmitter 44 is energized as late as possible to meet the timing considerations of the location pulse and is de-energized as soon as possible after the location pulse has been transmitted to minimize power consumption. Standby procedure 114 is performed in a loop, so task 144 is performed repetitively to transmit any number of pulses.

In accordance with the above-discussed local position determining embodiment of the present invention, an alternate task 144', shown in phantom in FIG. 9, may be performed rather than the above discussed task 144. In the local position determining embodiment, PDU 40 determines, or at least collects data to support determination of, its location. Thus, during task 144', PDU 40 tunes its receiver 46 (see FIG. 3) to a channel that broadcasts location pulses from an overhead satellite 14, then measures and saves time and frequency stamps for the location pulses. The time and frequency stamps may be saved in a data log table 146 (see FIG. 10) of memory 58 (see FIG 3). In other words, task 144' performs substantially the same tasks discussed above in connection with task 106 (see FIG. 6).

After task 144 or 144', or when task 142 determines that no location determination activities are needed, procedure 114 performs a query task 148 to determine whether any monitoring of the environment is needed. This determination may be made by examining a programmable parameter in memory 58 (see FIG. 3). If environment monitoring is requested, then a task 150 may energize appropriate sensors, if needed, obtain data from various sensors of sensor section 54, and save the sensor data. The sensor data may be saved in data log table 146 (see FIG. 10).

After task 150 or when task 148 determines that no environment monitoring is needed, procedure 114 performs a query task 154. Task 154 determines whether receiver 46 (see FIG. 3) has detected an incoming message from network 12 addressed to PDU 40. The incoming message may indicate that an incoming call is being set up or that network 12 is attempting to communicate with PDU 40 regarding position location activities.

When task 154 detects an incoming message, a task 156 is performed. If the incoming message indicates an incoming call, then task 156 may take whatever actions are needed to complete call set up. Such actions are not important to the present invention, but may include activities that amount to "answering" the call or going "off-hook", as is conventional in telephony. If the message itself is accompanied with data, then task 156 may save the data in memory 58. Data that might accompany a message may include, for example, latitude and longitude geolocation data. Such geolocation data may be calculated by a processing center in connection with the remote position determining embodiment of the present invention. Such location data can be saved in data log table 146 (see FIG. 10).

Data received in a call may be interpreted as a command or instruction to PDU 40 to take some predetermined action, and task 156 takes the indicated action. For example, such commands or instructions may cause task 156 to save programming data received with the command from a calling party via network 12 in memory 58. As discussed above, such programming data include data describing predetermined conditions to be met prior to PDU 40 becoming operational from its inactive mode. Likewise, a command may cause PDU 40 to power up its transmitter 44 (see FIG. 3), and transmit an appropriate response to a calling party via network 12. The response may include data saved in data log table 146 (see FIG. 10). Thus, an incoming call may be used to obtain location data and/or non-location environmental data. Responding data may describe other operational parameters. For example, such data may inform the calling party of the current frequency, time slot, and/or other operational parameters being used by PDU 40 to communicate through network 12. That way, a separate directional homing receiver may be tuned to the indicated operational parameters to pinpoint a location for PDU 40 so that PDU 40 may be physically obtained. Alternatively, such returned data may describe the battery status of PDU 40 or current programming for PDU 40. Preferably, task 156 powers down transmitter 44 as soon as possible after any transmission to minimize power drain. While FIG. 9 illustrates the situation where tasks 154 and 156 are performed after tasks 142, 144, 148, and 150, those skilled in the art will understand that tasks 154 and 156 may be performed before or between tasks 142, 144, 148, and 150.

After task 156 or when task 154 determines that no incoming message has been received, a task 158 determines whether to enter a call-in operational mode. In the call-in mode, PDU 40 makes an outgoing call through network 12 to report its geolocation and respond to any commands that may be issued to it. The events which signal when to enter the call-in mode of operation may be programmed through event parameters stored in a call-in event table 160 (see FIG. 10) stored in memory 58 (see FIG. 3). These event parameters operate similarly to the activation event parameters discussed above in connection with table 122. In addition, such call-in event parameters may be configured to signal a call-in event upon the completion of other activities, such as position determination activities. In other words, table 160 may be configured so that task 158 declares a call-in event after the PDU's position has been determined to a given degree of precision, after a predetermined quantity of time and frequency stamp data has been collected, or upon the occurrence of any other desirable event. Those skilled in the art will appreciate that location determination and location reporting need not occur at the same time. For example, a PDU 40 may be programmed to cycle between numerous inactive and operational modes of operation to collect numerous points of data for geolocation and/or environment monitoring, for each call-in cycle. The call-in cycle may, if desired, be programmed to occur at a time when communication service rates are expected to be lowest.

When task 158 determines that a call-in event has occurred, a task 162 manages the call. In particular, task 162 powers up transmitter 44 and sets up a call through network 12. As discussed above, in the preferred embodiments of the present invention a call may be placed to any phone number via network 12 and PSTNs 22 coupled thereto. However, PDU 40 preferably places a call to a MO 28 that may be expecting such calls. The phone number of MO 28 is a programmable parameter 164 (see FIG. 10) stored in memory 58 (see FIG. 3). When the call is set up, PDU 40 reports its geolocation, as determined by data stored in data log table 146 (see FIG. 10) and responds to any commands issued by MO 28, including the dumping of environmental data and the storing of new programming parameters. Accordingly, task 162 operates in a manner similar to that described above for task 156. When communications with MO 28 are completed, task 162 terminates the call and powers down transmitter 44.

After task 162 or when task 158 determines that no call-in event has occurred, a query task 166 determines whether PDU 40 should "go to sleep." In other words, task 166 determines whether to exit the standby mode and return to the inactive mode. The determination made by task 166 may be made by examining a sleep event table 168 (see FIG. 10) stored in memory 58 (see FIG. 3). As discussed above in connection with tables 122 and 160 (see FIG. 10), table 168 stores data that define events. Such events may be based on time, on sensor readings, or on the completion of other events, such as performance of tasks 144 or 162. When task 166 determines that PDU 40 should remain in its standby mode of operation, program control returns to task 140, discussed above. When task 166 determines that PDU 40 should enter its inactive mode, program control returns to Inactive procedure 110, discussed above in connection with FIG. 7.

The standby mode of operation allows PDU 40 to engage in activities that lead to the determination of its geolocation, the monitoring of its environment, and communication with network 12 and MO 28. The programmable nature of PDU 40 provides great flexibility in the frequency and other conditions that cause PDU 40 to determine its position and collect environmental data. Moreover, the communication opportunities with MO 28 allow this programming to change when PDU 40 is in the field. In particular, an entire plan for determining position and monitoring the environment may be changed as needed by MO 28 in response to previously reported data or in response to other circumstances that have nothing to do with PDU 40. Moreover, the programmability of PDU 40 allows the cost of services used in determining position and reporting position to be tailored to those services minimally necessary to serve the needs of MO 28. Consequently, many low cost remote position determining applications are supported by the present invention.

FIG. 11 shows a flow chart of a position determining procedure 170. In the remote position determining embodiment of the present invention, procedure 170 may be performed at a CSO 16 (see FIG. 1), however the precise location is not an important factor. In the local position determining embodiment, this procedure may be performed at PDU 40 or at MO 28.

Procedure 170 operates upon the time-of-arrival and frequency-of-arrival tags recorded in response to the receipt of location pulses. These tags were discussed above in connection with tasks 106-108 (see FIG. 6) and task 144' (see FIG. 9). The tags are associated in data records, with one record describing a single location pulse with respect to a single PDU 40. Procedure 170 performs a task 172, if necessary, to receive and save location records. Task 172 is performed when a CSO 16 or a MO 28 serves as a processing center. After location records have been saved, a query task 174 determines whether the number of location records for any particular PDU 40 exceeds a predetermined threshold. At least one record is needed to begin to resolve a PDU's geolocation, with additional records being useful in resolving geolocation to greater and greater degrees of precision. Different applications can require the calculation of geolocation to different degrees of precision. So long as an insufficient number of location records are available, program control loops back to task 172 to collect additional location records.

When task 174 determines that a sufficient number of geolocation records are present to begin geolocation calculations for a particular PDU 40, a task 176 locates the cellular area of the satellite 14 used in forming the location records. In other words, the area on the surface of the earth that is covered by the cells 34 (see FIG. 2) during the times indicated in the records' time-of-arrival tags is determined. This area may be determined by consulting a table (not shown) which defines the satellite's orbital geometry with respect to time. Orbits 20 (see FIG. 1) are relatively stable, and by knowing characteristics of an orbit 20 and the antennas 82 (see FIG. 5) on satellite 14, the cellular area of coverage is unambiguously determined given the parameter of time from the location records.

FIG. 12 shows a graphical representation of calculations used in determining geolocation. The boundary for a cell 34 (see FIG. 2) is illustrated by a curve 178 in FIG. 12. Curve 178 is overlaid on a map that may, for example, have latitude and longitude coordinates. FIG. 12 shows only one curve 178 for clarity, but those skilled in the art will appreciate that multiple curves 178 may be overlaid on a map to correspond to multiple geolocation records.

With reference to FIGs. 11 and 12, after task 176 a task 180 constructs a time-of-arrival (TOA) circle 182 and frequency-of-arrival (FOA) curve 184 for each geolocation record. FIG. 12 shows only one TOA circle 182 and FOA curve 184 for clarity. As shown in FIG. 12, TOA circles 182 are spherical shapes whose intersection with the earth's surface forms a circle that defines possible locations for PDU 40. The radius of this circle is determined based on the propagation delay of signals traveling between PDU 40 and satellite 14. The possible locations are on the perimeters of TOA circles 182. Although FIG. 12 shows only one TOA circle 182 for clarity, those skilled in the art will appreciate that multiple circles 182 from respective multiple geolocation records should overlap one another to some degree, with smaller diameter circles resulting from location pulses transmitted when satellite 14 and PDU 40 are closer to one another.

FOA curves 184 are hyperbolas that represent the possible locations that would result in location pulses having the Doppler observed in each location record. FIG. 12 shows only one FOA curve 184 for clarity, but those skilled in the art will appreciate that multiple curves generally resemble other curves similar to the one shown in FIG. 12 but slightly rotated.

When multiple geolocation records are characterized by task 180, a TOA error ellipse (not shown) is produced from performing a weighted least squares average of the points on TOA circles 182, and an FOA error ellipse is produced from performing a weighted least squares average on the points on FOA curves 184. Error ellipses account for changes in propagation delay and Doppler that result from satellite 14 moving relative to PDU 40. The areas within error ellipses indicate the most probable locations for PDU 40.

After task 180, a task 190 finds the intersection between the curves. As shown in FIG. 12, an ambiguity exists because TOA circle 182 and FOA curve 184 intersect each other at two points. This ambiguity may be resolved by consulting the identity of the cell 34 from which location pulses were recorded, as indicated by boundary curve 178.

When multiple geolocation records are utilized, the approximate center of the area of intersections between error ellipses indicates the geolocation for PDU 40. The precision of the geolocation determination is reflected by the area of intersection between error ellipses. Those skilled in the art will appreciate that as more location records are included in the calculations of tasks 180 and 190, the smaller this area of intersection will become and the more precise the geolocation will become. As discussed above, PDU 40 can be programmed so that as many location pulses are generated or monitored as are needed to achieve a desired degree of precision.

With reference to FIG. 11, tasks 192 and 194 are performed by a CSO 16 in the remote position determining embodiment of the present invention. Task 192 sends a message to PDU 40 informing PDU 40 of its location, and task 194 records the transaction for future billing purposes. The billing record may be forwarded to an appropriate billing center (not shown) via network 12 at an appropriate time. As discussed above in connection with FIG 9, PDU 40 may save its geolocation data in a table and then transmit the geolocation data to MO 28 at a convenient time. Of course, CSO 16 may alternately send the geolocation data directly to MO 28.

FIGs. 13-20 illustrate how the present invention as presented above in connection with FIGs. 1-12 may be adapted to provide intelligent tracking. FIG. 13 shows a block diagram of a subscriber unit 30 which operates in cooperation with communication network 12 (see FIG. 1) and a monitoring office (MO) 28 (see FIG. 1). Subscriber unit 30 resembles PDU 40 (see FIG. 3), except for the addition of various optional features. For example, subscriber unit 30 may optionally include a position location receiver 200, as for example a receiver capable of receiving Global Positioning System (GPS), GLONASS, LORAN, or other location-determination signals. Position location receiver 200 is not necessary for successful intelligent tracking. However, in applications which require extremely precise location data, such data may be provided through processing signals received from receiver 200. Receiver 200 receives location-determination signals from an antenna 202 and provides its output to processor 52.

Subscriber unit 30 need not be energized exclusively or partially from its own internal battery 50. For example, when intelligent tracking is being performed by aircraft, ships, trucks, or other vehicles, the batteries of such vehicles may be used to energize unit 30. In other applications where size permits, such as in connection with railroad cars, solar cells may be adapted to provide external power. Thus, a contact 204, which couples to battery 50 and/or other components of unit 30, may be provided for the receipt of external power. Those skilled in the art will appreciate that internal battery 50 may be omitted in some applications when external power is supplied to subscriber unit 30.

Subscriber unit 30 may optionally include an input/output (I/O) section 206, which couples to processor 52 and which interfaces unit 30 to the outside world. I/O section 206 is used to collect user inputs, such as the operation of power switches and/or the collection of phone numbers for placing a call. In addition, I/O section 206 may include vocoders, decoders, microphones, and loudspeakers to obtain and provide audio information from/to a user of subscriber unit 30. Thus, nothing prevents subscriber unit 30 from simultaneously operating as a voice subscriber unit (VSU) 38 (see FIG. 1). Furthermore, I/O section 206 may include a data port so that data may be transferred to and from subscriber unit 30 without necessitating the use of RF communications through transceiver 42.

Unit 30 may optionally include an alarm 208. Alarm 208 may represent a buzzer, warning light, or any other conventional alarming device. Alarm 208 couples to processor 52. As will be discussed below, processor 52 may automatically activate alarm 208 to provide a warning that the object being tracked has deviated off course.

In accordance with the present invention, monitoring office (MO) 28 (see FIG. 1) may advantageously include a conventional personal computer, including a processor, memory, video terminal, keyboard, printer, and other conventional peripherals (not shown), which couples to one or more phone lines through modems or the like. Thus, a block diagram of MO 28 resembles the block diagram shown in FIG. 4 for a CSO 16, with at least one exception. MO 28 need not include communication network transceiver 60. Rather, MO 28 communicates through communication network 12 (see FIG. 1) via PSTN 22 and a CSO 16 (see FIG. 1).

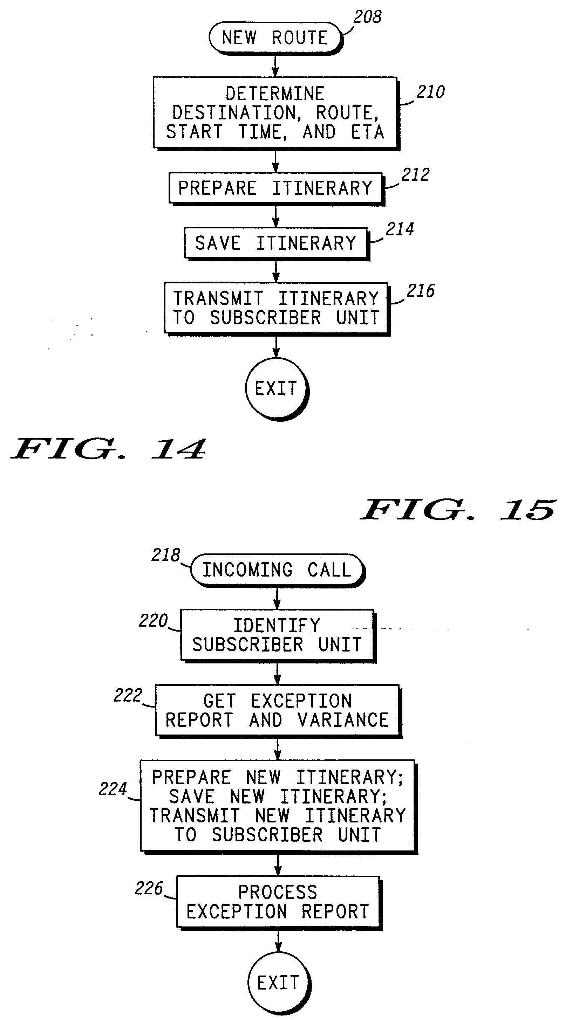

FIGs. 14-16 show flow charts of procedures performed by MO 28 in support of intelligent tracking. Those skilled in the art will appreciate that the procedures depicted in FIGs. 14-16 may be carried out, at least in part, through the performance of instructions by a processor located in MO 28 and that such instructions may be stored within a memory located in MO 28. Moreover, the selection of which procedure to perform at any given instant may be undertaken using conventional executive, operating system, or other computer controlling techniques well known to those skilled in the art.

FIG. 14 shows a flow chart of a New Route procedure 208. Procedure 208 is performed whenever an object which is the subject of intelligent tracking is about to embark on a new route or upon a course of action which may deviate from a route previously associated with the object. Of course, those skilled in the art will appreciate that the new route need not require significant movement on the part of the object being tracked. In fact, a new route may represent the parking of an object.

Procedure 208 performs a task 210 to determine a destination for the object, the route to be taken by the object, an estimated starting time, and an estimated time of arrival (ETA). The precise manner of determining these factors is not important to the present invention. For example, such factors may be worked out manually and simply entered into a computer at MO 28. On the other hand, one or more of these factors may be automatically generated by a computer given other factors.

After task 210, a task 212 uses these factors to prepare an itinerary. The itinerary includes a series of data records describing various points along the route. The data records preferably describe the location of such various points and the ETA of the object at these points. The precise number of points used to describe an itinerary is not important, and an itinerary may describe only a single point.

The itinerary may additionally include boundary data. Generally speaking, the boundary data define an area which is related to the points in the itinerary. The area may, for example, be a circle of a given radius that is centered at a point. Alternatively, the area may, for example, be a rectangle or any other geometric shape. The boundary data define a tolerance around the points included in the itinerary. So long as the object being tracked remains within the area or tolerance specified by the boundary data, the object may be considered as being on course.

After task 212 prepares an itinerary, a task 214 saves the itinerary in a memory of MO 28 for subsequent use. The itinerary is preferably saved in association with an ID for the subscriber unit 30 and/or object with which the subscriber unit 30 is physically associated. This association allows the itinerary to be quickly retrieved when the ID is provided to MO 28.

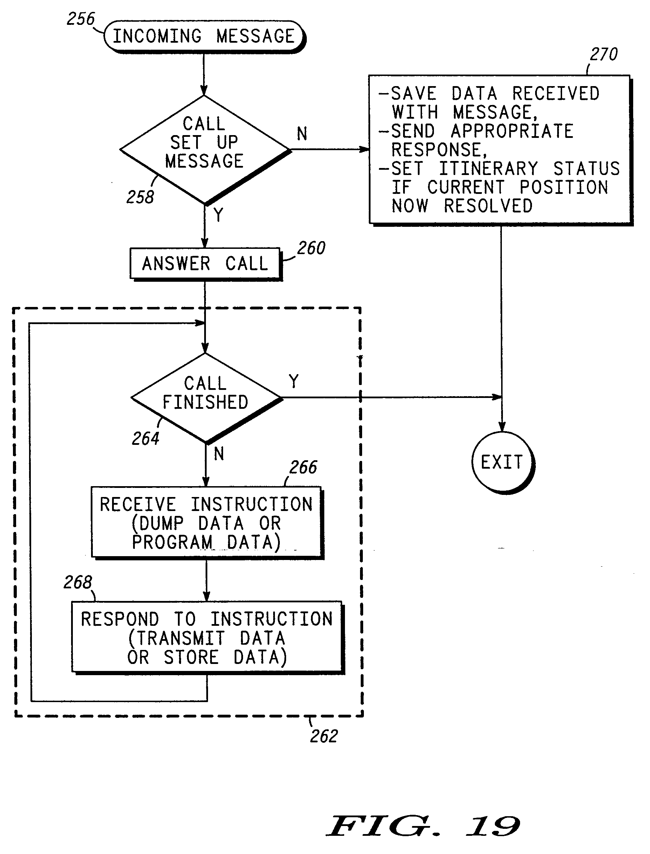

After task 214, a task 216 desirably, but not essentially, transmits the itinerary to the affected subscriber unit 30. The itinerary may be transmitted either directly through I/O section 206 (see FIG. 13) or through a programming call placed through PSTN 22 and communication network 12 (see FIG. 1) to subscriber unit 30. As will be described below, the itinerary is desirably stored in the subscriber unit 30 and serves as a portion of the subscriber unit's programming. FIG. 18 illustrates an exemplary table for storing the itinerary within the subscriber unit 30.

Upon completion of task 216, program control exits procedure 208. However, those skilled in the art will appreciate that procedure 208 may be performed any number of times with respect to any single subscriber unit 30. Moreover, a monitoring office 28 may be tasked with tracking any number of subscriber units 30 and related objects, and procedure 208 may be performed at any time with respect to any of these units 30.

FIG. 15 shows a flow chart of an Incoming Call procedure 218, which a MO 28 performs when it receives a call from a subscriber unit 30 through communications network 12 and PSTN 22 (see FIG. 1). A controlling procedure (not shown) which routes program control to procedure 218 may use conventional programming techniques to answer the call and to determine that the call was initiated by a subscriber unit 30 before routing program control to procedure 218. Preferably, procedure 218 is performed only when the information to be passed by the call is likely to be considered valuable information, as is discussed below. The restriction of calls to monitoring office 28 to report only what will likely be valuable information significantly reduces the expenses associated with utilizing communication services provided by PSTN 22 and communication network 12 (see FIG. 1). Moreover, this restriction of calls reduces the processing power and telecommunication interfaces needed to track numerous objects.

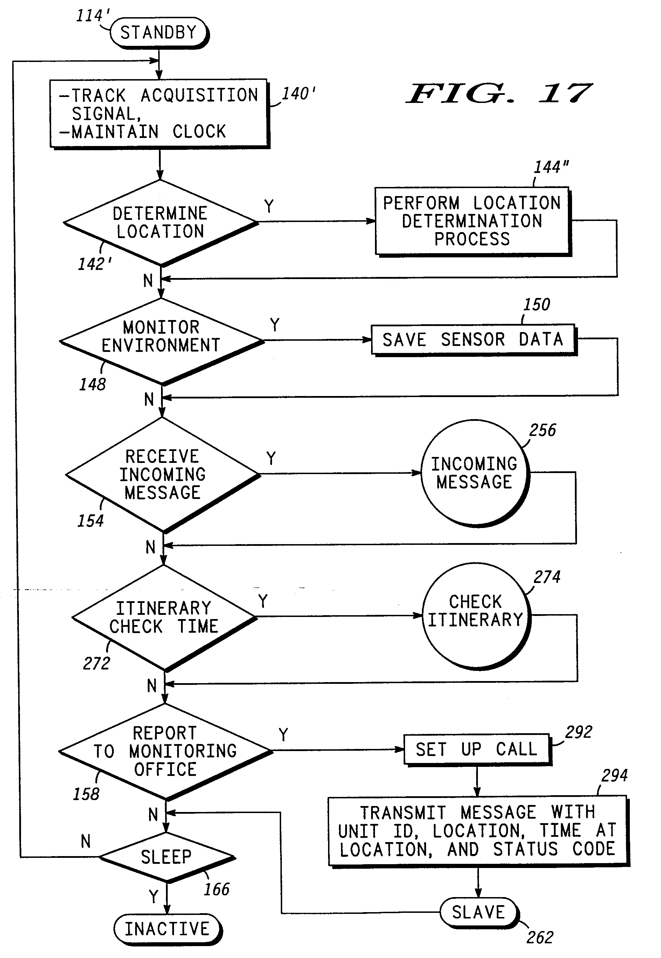

Procedure 218 performs a task 220 to identify the subscriber unit 30 that initiated the call. As will be discussed below in connection with FIG. 17, the subscriber unit 30 sends an identifying ID which MO 28 may use in making its identification. After task 220, a task 222 gets an exception report and a variance, which are described by data provided by the subscriber unit 30 that initiated the call. The exception report preferably indicates the current position for the object and the date and time at which the current position was determined. MO 28 may consult the itinerary saved for this subscriber unit 30 in task 214 (see FIG. 14) to determine the variance of this current position and time from the itinerary. Alternatively, the variance data may be provided by the subscriber unit 30.

The subscriber unit 30, as will be discussed below, desirably has been programmed to determine when it has varied sufficiently from its itinerary to necessitate the exception report call to MO 28. The exception reports and the associated calls which utilize communication services, desirably occur only when the objects being tracked deviate from their itineraries. In a tracking application, this is likely to be considered valuable information. MO 28 is not bombarded with numerous low-value reports which might only inform MO 28 that an object being tracked is on course. Accordingly, an exceedingly large number of objects may be tracked with minimal expense.

After task 222 has determined the amount by which an object has deviated from its itinerary, a task 224 may optionally prepare a new itinerary. A new itinerary is desirable because one deviation from the itinerary often suggests that subsequent deviations are likely to occur. In other words, once an object has deviated from one point in its itinerary sufficiently far to justify an exception report, it is unlikely that the object will be able to meet the remaining itinerary points. Accordingly, task 224 may adjust the itinerary to something more realistic because little value would be provided by future exception reports that merely inform MO 28 of a failure to meet the remaining itinerary points. Hence, the preparation of a new itinerary reduces the number of future exception reports which would otherwise be received without altering the itinerary. The new itinerary is saved and transmitted to the subscriber unit 30 as described above in connection with FIG. 14. However, the transmission of a new itinerary to the subscriber unit 30 is preferably performed at task 214 through PSTN 22 and communications network 12 (see FIG. 1).

After task 224, a task 226 processes the exception report. Task 226 may perform any of many diverse activities to process the exception report. For example, a written record of the exception may be printed at a printer so that an operator may decide what action is suggested by the exception. Buzzers or warning lights may be activated to inform an operator of the exception. In other applications, telephone calls may be automatically placed to parties associated with the destination of the object being tracked to inform such parties of the object's new ETA. In still other applications, telephone calls may be automatically placed to object owners or security services to inform such parties of the movement of the object outside an area programmed into the object's subscriber unit.

After task 226, program control exits procedure 218. Of course, procedure 218 may be repeated any number of times as incoming calls are received, whether from the same or other subscriber units 30. Moreover, procedure 218 may be configured as a reentrant procedure so that it may be simultaneously performed to service simultaneous incoming calls.

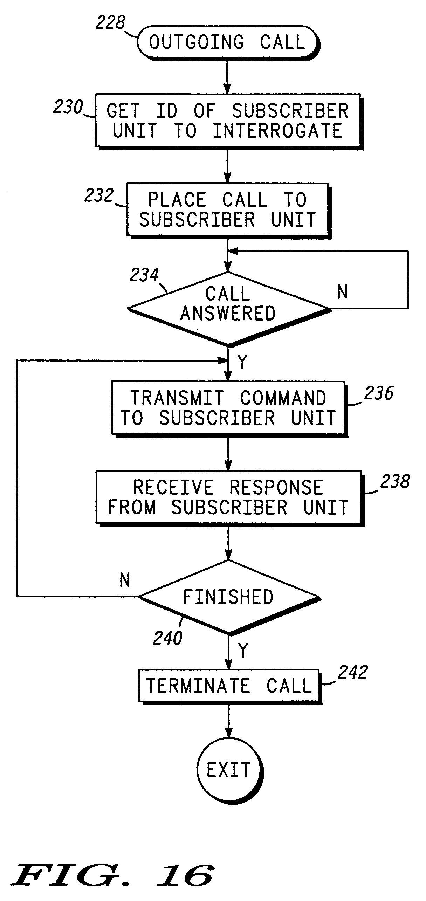

When a need arises, monitoring office 28 may initiate a call to a subscriber unit 30 using an Outgoing Call procedure 228, a flow chart of which is shown in FIG. 16. Procedure 228 may be performed at any time. Thus, nothing requires a subscriber unit 30 to first call MO 28 before MO 28 can communicate with the subscriber unit 30.

Procedure 228 performs a task 230 to get the ID of the subscriber unit 30 with which a communication session is desired. User input to MO 28 may supply this ID, either directly by an operator entering the phone number of the subscriber unit 30 or indirectly through the specification of an associated person's or object's identity.

After task 230, a task 232 places a call to the indicated subscriber unit 30 using procedures consistent with the requirements of PSTN 22 and communications network 12 (see FIG. 1). In the preferred embodiment, such procedures employ conventional telephony signalling techniques. After placing the call, a query task 234 determines whether the call has been answered. Program control remains at task 234 until an answer is detected at MO 28. Of course, conventional techniques for detecting busy or no answer conditions and terminating the call in response are contemplated, even though such techniques are not specifically depicted in FIG. 16.

When the call placed to the identified subscriber unit 30 is answered, a task 236 transmits a command to the subscriber unit. The command represents a data message instructing the subscriber unit 30 to either read a specified portion of its memory and to transmit the data so read back to MO 28 or to write specified data to a specified portion of the memory in the subscriber unit 30. The particular command will depend on the reason for performing procedure 228. Read commands may, for example, request the subscriber unit 30 to transmit its current position or current environmental readings obtained through sensors 54 (see FIG. 13). Write commands may, for example, program the subscriber unit 30 with an itinerary and/or with other parameters which dictate activation events, call-in events, or the like, as discussed above in connection with FIGs. 8-10.

After task 236, a task 238 causes MO 28 to receive a response from the subscriber unit 30. For a read command, the response may convey the data requested by the read command, and this data may be saved or displayed. For a write command, the response may convey an acknowledgement that the requested programming has now been performed. After task 238, a query task 240 determines whether the call may now be finished. Task 240 gives an operator of MO 28 an opportunity to send multiple commands to subscriber unit 30. If the call should continue, program control loops back to task 236 so that another command may be sent to the subscriber unit 30. If the call is finished, a task 242 terminates the call, and then program control exits procedure 228. Of course, procedure 228 may be repeated any number or times for the same or different subscriber units 30.

FIG. 17 shows a flow chart of a Standby procedure 114' which a subscriber unit 30 may perform in support of intelligent tracking. Procedure 114' is similar to procedure 114, discussed above in connection with FIG. 9. As with procedure 114, procedure 114' is performed when subscriber unit 30 has contacted communications network 12 and logged on to the network. This may occur periodically in accordance with an energy maintenance plan as discussed above in connection with FIGs. 7-8. Alternatively, in embodiments of subscriber unit 30 where the conservation of power is not a critical issue, this may occur rarely. For example, subscriber unit 30 may remain operational and in the loop described by Standby procedure 114' for as long as external power is supplied to it.

Upon entering procedure 114', subscriber unit 30 may perform some background activities in a task 140', such as continuing to track the acquisition signal which was initially captured above in task 126 (see FIG. 8) and maintaining its internal clock. After task 140', a query task 142' determines if subscriber unit 30 now needs to engage in position determination activities. As a minimum, task 142' may consult an itinerary table 244, a block diagram of which is presented in FIG. 18, to decide whether to determine location.

With reference to FIG. 18, itinerary table 244 represents a memory structure maintained within memory 58 of subscriber unit 30 (see FIG. 13). Itinerary table 244 has been programmed with an itinerary, as discussed above in connection with FIGs. 14-16. Accordingly, table 244 includes any number of data elements 246. Each data element includes data 248 describing a date and time and data 250 describing a location, such as a latitude and longitude. Accordingly, each data element 246 describes one point in the itinerary.

Table 244 additionally includes boundary data 252. FIG. 18 illustrates one item of boundary data 252 being associated with each data element 246, but this is not necessary. The boundary data 252 may, for example, describe a distance which subscriber unit 30 may interpret as a radius of a circle which is centered at the locations specified by corresponding location data 250. Alternatively, the boundary data 252 may, for example, describe two locations which subscriber unit 30 may interpret as being opposing corners of a rectangle. Those skilled in the art will be able to devise other techniques for describing various shapes of areas which relate to specific locations.

In an alternative embodiment, one item of boundary data 252 may apply to all data elements 246. In this embodiment, if the boundary data describe a radius, for example, then the different locations described by different data elements 246 have different circles of common radius associated therewith. Such circles are different because the different data elements describe different locations for the centers of the circles.

Table 244 may additionally include status data 254 associated with data elements 246. Status data may describe the current status of subscriber unit 30 along its itinerary.

Referring back to FIG. 17, query task 142' may examine the date and time data 248 of itinerary table 244 (see FIG. 18) to determine if a match exists between the time indicated by the internally maintained clock of subscriber unit 30 and data 248 from a data element 246 (see FIG. 18). Task 142' may ignore those data elements 246 for which corresponding status data 254 indicate that a position has been or is being determined. If approximately the same time is indicated, then task 142' may decide to determine location.

In one embodiment of the present invention wherein intelligent tracking is being used to inform MO 28 when an object leaves a predefined area, task 142' may decide to determine location at regular intervals. These intervals may be indicated by special coding of data 248 (see FIG. 18). While, task 142' consults itinerary table 244 to determine whether to determine its location, nothing prevents task 142' from consulting other tables, flags, or the like. Thus, task 142' may decide to determine location more often than indicated by itinerary table 244. The data from such other location determinations may be stored in data log table 146 (see FIG. 10).

When a decision to determine location has been made, task 142' may additionally set a flag to indicate that a current position determination is underway, and proceed to a task 144''. Task 144'' performs a location determination process as discussed above in connection with tasks 144 or 144' (see FIG. 9). Alternatively, task 144'' may process signals obtained from position location receiver 200 (see FIG. 13) to determine the current position for subscriber unit 30 and the object with which it is physically associated.

When task 142' decides not to determine location, or when task 144'' has finished, query task 148 is performed. Query task 148 determines whether to monitor the environment. If environmental monitoring is indicated, task 150 performs the monitoring and saves the data which results. Tasks 148 and 150 here are substantially the same as discussed above in connection with FIG. 9.

After tasks 148 or 150, query task 154 is performed to determine whether an incoming message from communications network 12 has been received, as discussed above in connection with FIG. 9. When such a message is received, procedure 114' performs an Incoming Message procedure 256. As noted previously, task 154 may be performed before or between tasks 142, 144, 148, and 150, or at other times.

FIG. 19 shows a flow chart of Incoming Message procedure 256. Procedure 256 performs a task 258 to determine if the received message relates to a call that is being set up to subscriber unit 30 or to a system message originated within communication network 12. If task 258 determines that a call is being set up, then a task 260 is performed to complete the call set up process and to answer the call.

After task 260, subscriber unit 30 performs a slave process 262. Process 262 causes subscriber unit 30 to respond to any commands which may be received during the call. Slave process 262 performs a query task 264 to determine whether the call is now finished. Task 264 determines whether the calling party, presumably a MO 28, has terminated the call as discussed above in connection with task 242 (see FIG. 16). In addition, task 264 may make other checks as well. For example, passwords may be verified and/or time may be monitored to determine if a proper response is received within a predetermined period of time. If task 264 concludes that the call is finished, then program control exits slave process 262 and procedure 256.

When task 264 determines that the call is not finished, a task 266 receives an instruction or command. As discussed above in connection with FIG. 16, such instructions or commands are generally configured as read or write commands, which cause unit 30 to dump data or program data, respectively. During a programming call, a command to write itinerary data to itinerary table 244 (see FIG. 18) may be received. Of course many other types of commands may be received as well.

After task 266, a task 268 responds to the instruction received in task 266. For an instruction which commands subscriber unit 30 to program itinerary data into itinerary table 244 (see FIG. 18), task 268 causes data received during the call to be written to memory 58 (see FIG. 13) within table 244, and task 268 may transmit an appropriate acknowledgment message back to MO 28. After task 268, program control loops back to task 264 to determine whether the call is finished.

Referring back to task 258, when a message is received which is not related to call set up, program control proceeds to a task 270. Task 270 saves any data which might accompany the message. For example, such data may specify the current position for subscriber unit 30, as discussed above in connection with FIG. 9. Task 270 may additionally send an appropriate response or acknowledgement to the message. If the current position of subscriber unit 30 is now resolved, task 270 may set the appropriate status data 254 (see FIG. 18) or flags to indicate that the current position has now been resolved. After task 270, program control exits procedure 256.

With reference back to FIG. 17, after completion of procedure 256 or when task 154 determines that no incoming message has been received, program control proceeds to a query task 272. Task 272 determines whether now is the time to perform an itinerary check. As discussed above in connection with task 142', task 272 may consult itinerary table 244 (see FIG. 18) in making its determination. When the current time as indicated by the internally maintained clock of subscriber unit 30 indicates substantially the same time as date/time data 248 from one of data elements 246 (see FIG. 18), subscriber unit 30 performs a Check Itinerary procedure 274.

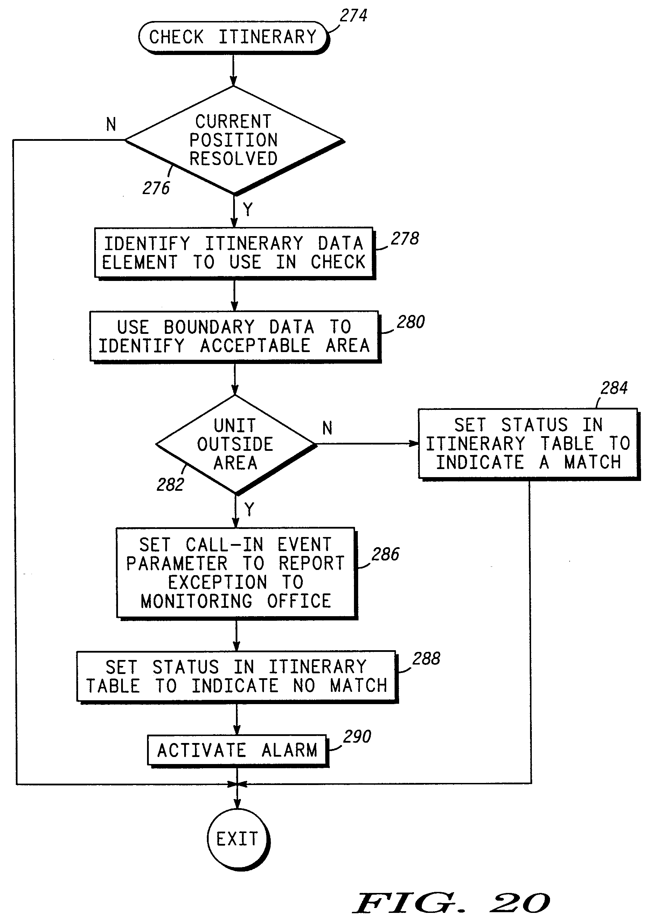

FIG. 20 shows a flow chart of Check Itinerary procedure 274. Procedure 274 performs a query task 276 to determine whether the current position has been resolved yet. This determination may be accomplished by examining flags or status data 254 (see FIG. 18) which may have been set prior to performing task 144'' (see FIG. 17). If the current position is being determined but has not been resolved yet, then program control exits procedure 274 and returns to procedure 114' (see FIG. 17). The loop of procedure 114' will cause task 276 to be repetitively performed until the current position is resolved.

When the current position has been resolved, a task 278 identifies a particular itinerary data element 246 (see FIG. 18) to use in making the itinerary check. The itinerary data element to use is the one whose date/time data 248 approximately indicates the current time. After task 278, a task 280 uses the corresponding boundary data 252 to identify an area which is deemed acceptable. As discussed above, when subscriber unit 30 resides within the acceptable area, no exception report call is made to MO 28. However, if subscriber unit 30 is found to reside outside the acceptable area, then an exception report call is made to MO 28 to report a variance from the itinerary.

After the acceptable area has been determined, a query task 282 compares the current position for subscriber unit 30 with this area to determine whether the subscriber unit's current position matches the itinerary. When the area is configured as a circle and the boundary data describes a radius, for example, then task 282 may simply calculate whether the current position is a distance greater than the radius away from the location indicated by data 250 within the data element 246 being used for the itinerary check.

When task 282 calculates that subscriber unit 30 is not outside the acceptable area, then a task 284 is performed. Task 284 sets the corresponding status data 254 (see FIG. 18) for the itinerary table data element 246 being used for the itinerary check to indicate a match with the itinerary. After task 284, program control exits procedure 274 and returns to standby procedure 114' (see FIG. 17). No report call will be placed to MO 28. The itinerary check of procedure 274 will be repeated for each data element 246 within itinerary table 244 (see FIG. 18). This will correspond to at least one check for each point along a route described in the itinerary. When intelligent tracking is being used to determine whether an object has left a predetermined area, a single itinerary point may be repeatedly checked at regular intervals.

When task 282 concludes that subscriber unit 30 is outside the acceptable area, a task 286 is performed. Task 286 sets a call-in event parameter so that an exception report call will be initiated to MO 28. Call-in event parameters are discussed above in connection with FIGs. 9-10. After task 286, a task 288 sets the corresponding status data 254 (see FIG. 18) for the itinerary table data element 246 being used for the itinerary check to indicate no match with the itinerary. The data from this data element 246 will be included in an exception report made to MO 28.

After task 288, an optional task 290 activates alarm 208 (see FIG. 13). This activation will cause a buzzer to sound, a warning light to flash, or the like. Where desired, this activation can inform an operator of the object being tracked that the object is off course and that a report has been queued for transmission to MO 28. After task 290, program control exits procedure 274 and returns to procedure 114' (see FIG. 17). As explained below, a call will be initiated to MO 28 to report the mismatch between actual position and position indicated in the itinerary.

Referring back to FIG. 17, after completion of Check Itinerary procedure 274 or when task 272 determines that it is not yet time to perform an itinerary check, a query task 158 is performed to determine whether to make a report to MO 28. As discussed above in connection with FIG. 9, the events which signal when to make the report to MO 28 may be programmed through event parameters stored in a call-in event table 160 (see FIG. 10) of memory 58 (see FIG. 13). Such programming may advantageously indicate the not-match-itinerary parameter which may have been set above in task 286. In other words, when a call-in event parameter has been set to indicate a failure to match the itinerary during an itinerary check, task 158 determines that a report needs to be made to MO 28.

When task 158 concludes that an exception report call needs to be made, a task 292 engages in the activities required by communications network 12 and PSTN 22 (see FIG. 1) to initiate call set up procedures to MO 28. Preferably, such activities include conventional steps for placing a call to a stored phone number. After task 292 has set up the call and the call has been answered by the called party, a task 294 is performed. Task 294 transmits a message to the called party, presumably a MO 28, which identifies the unit 30 or object making the call, the current location for the object, the time at which this current location was determined, and any other appropriate status codes. MO 28 should respond by performing Incoming Call procedure 218, discussed above in connection with FIG. 15.

After task 294, subscriber unit 30 essentially performs slave process 262, discussed above in connection with procedure 256 (see FIG. 19). In other words, subscriber unit 30 responds to commands issued by MO 28 until the call is terminated. In accordance with MO 28 performing its Incoming Call procedure 218 (see FIG. 15), such commands may include the programming of a new itinerary at subscriber unit 30. Of course, nothing limits subscriber unit 30 to receiving and responding to only such commands, and nothing requires subscriber unit 30 to receive commands which amount to the programming of a new itinerary.

After slave process 262 or when task 158 decides not to initiate a report call to MO 28, procedure 114' performs a query task 166. As discussed above in connection with FIG. 9. task 166 determines whether subscriber unit 30 should exit the standby mode and return to the inactive mode or whether subscriber unit 30 should remain in Standby procedure 114'. When task 166 concludes that program control should remain in procedure 114', program control loops back to task 140', discussed above, to repeat the tasks and procedures discussed above.

In summary, the present invention provides an improved system, method, and/or apparatus for remote position determination. Position determination in accordance with the preferred embodiments of the present invention is world-wide in scope, reliable, flexible, and inexpensive. The world-wide scope is achieved through a world-wide communications infrastructure provided by network 12. Reliability is achieved by the ubiquitous coverage of network 12, the power management of PDU 40, and the use of a single communications network to both determine position and report position. PDU 40 becomes operational only when a high likelihood exists for successfully generating and/or communicating location data. The power management of PDU 40 extends battery life. Flexibility is achieved through the programmability of PDU 40. The programmability of PDU 40 allows costs to be minimized because only those communication services that are needed to achieve a desired degree of tracking are utilized. In addition, the inexpensive nature of the present invention results from the use of a communications infrastructure which supports numerous applications, such as voice communication, in addition to position determination. Hence, the infrastructure overhead cost may be supported by numerous diverse applications in proportion to the applications' use of the infrastructure.

Moreover, the present invention may be easily adapted to provide improved intelligent tracking. In particular, a subscriber unit has sufficient intelligence to determine whether it is following a remotely programmed itinerary. If the subscriber unit fails to follow the itinerary, the subscriber unit initiates a call to a monitoring office to report a variance from the subscriber unit's itinerary. So long as a subscriber unit follows an itinerary, no calls are made to the monitoring office. The RF communications and PSTN communications required to support the tracking function are minimized because low value information indicating an on course status is not communicated. Rather, only information which is likely to be considered valuable is communicated.

The present invention has been described above with reference to preferred embodiments. However, those skilled in the art will recognize that changes and modifications may be made in these preferred embodiments without departing from the scope of the present invention. For example, others may devise alternate procedures to accomplish substantially the same functions as those described herein. Memory structures other than those depicted herein may by employed. Moreover, while the preferred embodiments described herein relate to particular orbital geometry, footprint geometry, and position determination algorithms, those skilled in the art will appreciate that the present invention may be applied to different geometries and algorithms that accomplish substantially the same thing. These and other changes and modifications which are obvious to those skilled in the art are intended to be included within the scope of the present invention.

## Claims

1. A method for operating a subscriber unit (30) in cooperation with a communication system, said method comprising the steps of:
establishing a programming call through said communication system;
receiving data describing an itinerary (244) during said programming call;
after said programming call, determining a position (142) for said subscriber unit (30);
comparing said subscriber unit (30) position with said itinerary data (244); and
when said comparing step determines that said position (142) does not match said itinerary (244), initiating a report call through said communication system to report a variance from said itinerary (244).

2. A method as claimed in Claim 1 wherein said itinerary data (244) comprises a series of data elements (246), and each of said data elements (246) includes location data (250) and time data (248).

3. A method as claimed in Claim 1 wherein said itinerary data (244) includes boundary data and location data (250), and said comparing step comprises the steps of:
identifying an area which is defined by said boundary data and which is related to a location described by said location data (250);
calculating whether said position is outside said area; and
indicating that said position does not match said itinerary (244) when said position is outside said area.

4. A method as claimed in Claim 1 wherein:
said itinerary data (244) includes boundary data and a plurality of data elements (246) in which each of said data elements (246) includes location data (250) and time data (248);
said method additionally comprises the step of maintaining a clock (118) which indicates current time;
said method additionally comprises the step of repeating said determining and comparing steps whenever said current time indicates approximately the same time as said time data (248) from one of said data elements (246); and
said comparing step comprises the steps of:
identifying an area which is defined by said boundary data and which is related to a location described by said location data (250) associated with said one data element;
calculating whether said position is outside said area; and
indicating that said position does not match said itinerary (244) when said position is outside said area.

5. A method as claimed in Claim 1 additionally comprising, after said initiating a report call step, the steps of:
receiving new itinerary data (244) from said communication system; and
storing said new itinerary data (244).

6. A method as claimed in Claim 1 wherein said determining said position (142) step comprises the steps of:
receiving an acquisition signal from said communication system; and
cooperatively communicating with said communication system to resolve and report a position for said subscriber unit (30), said communicating step being performed in response to receipt of said acquisition signal and through transmissions of messages from said subscriber unit (30) for receipt by said communication system.

7. A method for tracking objects from a remotely located monitoring office (28) using communication services provided by a communication system, said method comprising the steps of:
physically associating a subscriber unit (30) with said object;
establishing a programming call through said communication system to said subscriber unit (30), said programming call serving to program said subscriber unit (30) with an itinerary (244) described by itinerary data (244);
after said programming call, identifying the occurrence of an event, said event being identified in response to said itinerary data (244);
determining, in response to said event, a current position for said object;
comparing said current position of said object with said itinerary data (244); and
when said comparing step determines that said current position of said object does not match said itinerary data (244), initiating a report call through said communication system to said monitoring office (28) to report a variance from said itinerary.

8. A method as claimed in Claim 7 wherein said determining step comprises the step of cooperatively communicating between said subscriber unit (30) and said communication system to determine said current position.

9. A method as claimed in Claim 8 additionally comprising the steps of:
transmitting an acquisition signal from an orbiting satellite (14), said satellite (14) serving as a node in said communication system; and
receiving said acquisition signal at said subscriber unit (30), said receiving step being performed in response to said activation event and prior to said determining step.

10. A telecommunication system for transporting communications between a monitoring office (28) and remotely located objects to aid in the tracking of said objects, said system comprising:
a constellation (12) of radio communication stations (14) orbiting the earth;
a monitoring office (28) configured to engage in data communications through said constellation (12); and
a population of subscriber units wherein each subscriber unit (30) is configured to engage in data communications through said constellation (12) with said monitoring office (28), and each subscriber unit (30) is configured in cooperation with at least a portion of said satellites to generate data which describe a current position of said subscriber unit (30) when said subscriber unit (30) departs from a predetermined itinerary (244).
